# EUROPÄISCHE PATENTSCHRIFT

(11) **EP 0 698 478 B1**
(45) Veröffentlichungstag und Bekanntmachung des Hinweises auf die Patenterteilung: **16.08.2001**
(21) Anmeldenummer: 95107394.9
(22) Anmeldetag: 15.05.1995
(51) Int. Cl.: B29D 30/06, B29C 35/08

(54) **Verfahren und Vorrichtung zur Herstellung von Fahrzeugluftreifen**
Process and apparatus for manufacturing vehicle tyres
Procédé et dispositif de fabrication de bandages pneumatiques

(30) Priorität: 09.06.1994 DE 4420198
(43) Veröffentlichungstag der Anmeldung: 28.02.1996
(73) Patentinhaber: Dunlop GmbH, 63450 Hanau (DE)
(72) Erfinder: Unseld, Klaus, Dr., D-63450 Hanau/Main (DE)
(74) Vertreter: Manitz, Finsterwald & Partner

(56) Entgegenhaltungen:
- EP-A- 0 072 505
- EP-A- 0 640 470
- FR-A- 2 016 679
- GB-A- 759 001
- GB-A- 1 587 889
- GB-A- 2 157 224
- US-A- 3 745 291
- US-A- 3 867 606
- US-A- 4 208 562

## Beschreibung

Die Erfindung betrifft ein Verfahren zur Herstellung von Fahrzeugluftreifen mit sich zwischen zwei Wulstringen erstreckender Karkasse und einem zwischen Karkasse und Lauffläche angeordneten Gürtel sowie eine Vorrichtung zur Verwendung in einem solchen Verfahren.

Ziel der vorliegenden Erfindung ist es, ein besonders wirtschaftliches Verfahren zur Herstellung von Fahrzeugluftreifen aus nichtmetallischen Bestandteilen zu schaffen, das eine hohe Qualität der Reifen gewährleistet.

Diese Aufgabe wird durch ein Verfahren gelöst, bei dem der jeweilige Reifenrohling unter ausschließlicher Verwendung von nichtmetallischen Bestandteilen aufgebaut und wobei im Verlauf der unter Einwirkung von Wärme und Druck erfolgenden Vulkanisation und Formgebung zumindest ein Teil der erforderlichen Wärmeenergie in Form von Mikrowellenenergie in den Reifen eingebracht und die im Reifen herrschende Temperatur in Abhängigkeit von der Temperaturentwicklung in verschiedenen Reifenbereichen und unterschiedlich für verschiedene Reifenbereiche geregelt wird.

Erfindungsgemäß wird die während der Behandlung des Reifens im Reifen herrschende Temperatur geregelt. Auf diese Weise wird eine optimale Wärmebehandlung des Reifens gewährleistet. Die Wärmebehandlung erfolgt in Abhängigkeit von der unterschiedlichen Temperaturentwicklung in verschiedenen Reifenbereichen. Hierzu können Temperaturfühler am und / oder im Reifen vorgesehen sein. Die Temperaturfühler können aber auch in der den Reifen aufnehmenden Heiz- bzw. Pressform untergebracht sein, wobei insbesondere auch Infrarot-Temperaturfühler Verwendung finden können.

Die Temperaturregelung kann insbesondere dadurch erfolgen, daß die Mikrowellenenergie, die in bestimmte Reifenbereiche eingebracht wird, gezielt verändert wird. Eine andere Möglichkeit besteht darin, eine Kühlung bestimmter Reifenbereiche vorzusehen. Auf diese Weise kann sehr schnell auf auftretende bzw. drohende Überhitzungen reagiert werden, die andernfalls zu Defektstellen führen könnten.

Die Regelung der Temperatur während der Reifenbehandlung kann insbesondere auch zeitabhängig erfolgen, das heißt der Reifen kann für bestimmte Zeiten jeweils auf einer bestimmten Temperatur gehalten werden. Dies kann auch für die einzelnen Reifenbereiche unterschiedlich erfolgen, beispielsweise kann der Wulstbereich für eine längere Zeit auf einer höheren Temperatur gehalten werden als die übrigen Reifenbereiche. Die Kühlung bestimmter Reifenbereiche kann insbesondere auch dadurch erfolgen, daß die Wärme von solchen Bereichen abgeführt und zu anderen Bereichen des Reifens hingeführt wird, so daß die vorhandene Wärme nicht verlorengeht. Es findet also eine Art Wärmetausch innerhalb des Reifens statt.

Zur Kühlung können in der Heizform Kanäle vorgesehen sein, durch welche Kühlflüssigkeit bzw. Wärmetauscherflüssigkeit geleitet wird.

Nach einer weiteren Ausgestaltung der Erfindung erfolgt die Regelung eines unterschiedlichen Energieeintrags in verschiedenen Reifenbereichen durch eine entsprechende Geometrie des Mikrowellenfeldes, welche insbesondere durch geeignete Reflexion und Brechung, beispielsweise zur Erzeugung von stehenden Wellen, erzielt werden kann. Zur Erzeugung von stehenden Wellen können die Mikrowellenhohlleiter und Mikrowellengefäße eine solche Geometrie aufweisen, daß sie ganzzahlige Vielfache der Wellenlänge, der halben Wellenlänge oder eines Viertels der Wellenlänge wiedergeben. Selbstverständlich können auch Mikrowellen unterschiedlicher Wellenlänge gleichzeitig verwendet werden. Der unterschiedliche Energieeintrag kann aber auch durch zumindest zeitweises Abdecken bestimmter Reifenbereiche erfolgen. Hierzu können Abschirmungen verwendet werden, welche die Mikrowellenstrahlung reflektieren und so von den gewünschten Reifenbereichen fernhalten. Die Abschirmungen können klappbar oder mit verschließbaren Öffnungen gestaltet sein, um die Abschirmung zeitlich zu beschränken und wahlweise einsetzbar zu gestalten.

Nach einer besonderen Ausgestaltung der Erfindung wird das Verfahren so angewendet, daß ein Reifenrohling zunächst konventionell oder durch Mikrowellenenergie vorgewärmt wird. Anschließend wird der Reifen in einer Heizpresse mit Druck beaufschlagt und erwärmt. Schließlich wird der Reifen unter Druck aus der Heizpresse entnommen und in einer Mikrowellenanlage ausvulkanisiert. Hierdurch wird die Zeit, in der der Reifen in der Heizpresse behandelt wird, verkürzt, so daß die relativ teueren Heizpressen einen erhöhten Durchsatz haben. Es kann hierfür eine spezielle Druckform vorgesehen sein, die selbstverständlich mikrowellengeeignet sein muß. Diese Druckform kann den Reifenrohling vollständig umgeben und an die Stelle der konventionell verwendeten Membran treten. Alternativ kann auch eine Vorrichtung verwendet werden, die den über die Membran auf den Reifen aufgebrachten Druck aufrechterhält.

Die Behandlung in der Heizpresse kann unter einem Druck von bis zu circa 30 bar erfolgen, sowie bei einer Temperatur von 110°C und beispielsweise vier bis fünf Minuten dauern. Die Ausvulkanisation in einer Mikrowellenanlage kann dann beispielsweise bei einer Temperatur von 260°C erfolgen. Hierbei steht der Reifen noch unter einem Druck von bevorzugt mindestens 10 bar bis 12 bar. Hierdurch wird gewährleistet, daß während der Vulkanisation keine Blasen entstehen, die zu einem mangelhaften Reifen führen könnten.

Nach einer weiteren vorteilhaften Ausgestaltung der Erfindung erfolgt die Behandlung der Fahrzeugreifen mit einem rotationssymmetrischen Mikrowellenfeld, welches den Reifen bevorzugt in radialer Richtung durchstrahlt. Durch diese Ausgestaltungen werden Unterschiede der Reifenqualität in Reifenumfangsrichtung vermieden, die zu späteren Reifendefekten oder zumindest zu einer Qualitätsverminderung führen können.

Bevorzugt werden die Mikrowellenstrahlen axial in das Zentrum des Reifens bzw. der Reifenheizform eingeleitet und von dort durch entsprechende Umlenkvorrichtungen in radialer Richtung durch den Reifenrohling geführt. Das radiale Mikrowellenfeld kann auch dadurch erzeugt werden, daß ein Feldaustritt der zentral in den Reifen bzw. die Reifenform eingeleiteten Mikrowellenenergie nur in radialer Richtung möglich ist. Bevorzugt sind hierzu axial beidseits des Reifens bzw. der Reifenform mikrowellenreflektierende Platten vorhanden, zwischen denen die axial eingeleitete Mikrowellenenergie hin und her reflektiert wird. In radialer Richtung können die Mikrowellen dagegen austreten und den Reifenrohling durchdringen. Sie werden frühestens von der Reifenheizform, sofern diese aus mikrowellenreflektierenden Material besteht, reflektiert, und so innerhalb der Mikrowellenanlage eingeschlossen. Anstelle der Reifenheizform kann aber auch eine extra hierfür vorgesehene Vorrichtung vorgesehen sein, um die Mikrowellen in der Anlage einzuschließen.

Die beiden mikrowellenreflektierenden Platten können relativ zueinander beweglich sein, wobei dies bevorzugt zur Reifenmittelebene symmetrisch erfolgt. Auf diese Weise ändert sich das Reflexions- und Beugungsbild, so daß eine gezielte Verteilung der Mikrowellenenergie über den Reifen bzw. eine Vergleichmäßigung der Verteilung der Mikrowellenenergie erfolgen kann.

Insgesamt ist durch das erfindungsgemäße Verfahren angestrebt, wie bereits oben ausgeführt, ein rotationssymmetrisches Mikrowellenfeld zu erzeugen. Hierzu ist also eine Vergleichmäßigung der Verteilung der Mikrowellenenergie erforderlich, da diese naturgemäß zur Ungleichverteilung neigt. In Mikrowellenhohlleitern und Mikrowellengefäßen, welche die Plattenanordnung zusammen mit der Reifenform bzw. der separaten Vorrichtung bildet, können stehende Wellen auftreten, die zu einer periodischen Verteilung der Mikrowellenenergie führen. Um eine solche Ungleichverteilung zu vermeiden, werden die entsprechenden Mikrowellenleiter und -gefäße so ausgebildet, daß möglichst keine stehenden Wellen auftreten können. Alternativ können stehende Wellen aber auch gezielt einsetzbar sein, indem dadurch die Mikrowellenenergie in bestimmten Reifenbereichen verstärkt eingebracht wird.

Es ist auch möglich, durch Bewegung des Reifens relativ zum Mikrowellenfeld oder durch Bewegung des Mikrowellenfeldes relativ zum Reifen eine Vergleichmäßigung der eingebrachten Mikrowellenenergie in den Reifen zu erzielen, wobei dies sowohl mit stehenden als auch ohne stehende Wellen erfolgen kann. Wichtig ist in jedem Falle, daß eine Ungleichverteilung entweder über die Zeit ausgeglichen wird oder aber nur in gewollter Weise eingesetzt wird. Gewollte Ungleichverteilungen des Energieeintrags treten jedoch hauptsächlich in axialer Richtung auf, insbesondere im Wulstbereich des Reifens kann ein stärkerer Energieeintrag vorgesehen sein als in den übrigen Reifenbereichen. Auch dies kann durch entspechende Relativbewegungen des behandelten Reifens relativ zum Mikrowellenfeld bzw. des Mikrowellenfeldes relativ zum behandelten Reifen erfolgen.

Eine Möglichkeit der Relativbewegung besteht darin, den behandelten Reifen mitsamt Reifenform im radialen Mikrowellenfeld zu rotieren und gegebenenfalls in axialer Richtung hin und her zu bewegen, wobei die Axialbewegung so erfolgen kann, daß Verweilzeiten in bestimmten Bereichen, insbesondere im Wulstbereich, größer sind als in anderen Bereichen.

Eine andere Möglichkeit der Vergleichmäßigung bzw. des gezielten Energieeintrages besteht darin, das zentral in den Reifen bzw. die Reifenform eingebrachte Mikrowellenfeld rotieren zu lassen, indem der Mikrowellenhohlleiter im Reifenzentrum mindestens eine radiale Mündung aufweist, welche um die Reifenachse rotierbar ist. Der Mikrowellenhohlleiter ist hierzu im Zentrum der Reifenform abgewinkelt bzw. weist ein T-förmiges oder ein- oder mehrfach gekreuztes Endstück mit entsprechend orientierten Austrittsoffnungen für die Mikrowellenstrahlung auf. Das Endstück bzw. die Mündungen können auch axial hin- und herbewegbar oder zur Radialrichtung neigbar bzw. geneigt sein, um wiederum eine Verteilung und gezielte Einbringung der Mikrowellenenergie in axialer Richtung zu bewirken.

Die Orientierung der Mikrowellen über die Mündung des einleitenden Hohlleiters oder über Reflektoren kann auch derart erfolgen, daß sich die Austrittsrichtung bzw. Reflexionsrichtung längs einer Spiralbahn verändert. Auch hierdurch wird eine Vergleichmäßigung und eine gezielte Einbringung der Mikrowellenenergie in bestimmte Reifenbereiche ermöglicht.

Anstelle eines Mikrowellenhohleiters mit radialer Mündung kann auch ein axial mündender Hohlleiter vorgesehen sein, vor dessen Mündung eine rotierbare, mikrowellenreflektierende Anordnung, insbesondere ein Mikrowellenquirl, vorhanden ist. Bei Rotation dieser Anordnung werden die Mikrowellen in Reifenumfangsrichtung gleichmäßig verteilt. Es können auch mehrere solche Anordnungen, auch in anderen Bereichen der Mikrowellenanordnung, vorhanden sein.

In einer besonderen Ausgestaltung weist die mikrowellenreflektierende Anordnung um ihre Längsachse verdrehbare Flügel auf als Reflektoren für die Mikrowellenenergie. Durch Veränderung des Stellwinkels der Flügel dieser Anordnung kann die Mikrowellenenergie in bestimmte Bereiche des Reifens gelenkt werden. Es kann aber auch einfach eine Vielzahl von Flügeln vorhanden sein, die zumindest zum Teil einen unterschiedlichen Stellwinkel aufweisen, um dadurch die gewünschte Verteilung der Mikrowellenenergie über den Reifen zu erzielen. Wohlgemerkt wird hierbei die Verteilung der Mikrowellenenergie in axialer Richtung des Reifens beeinflußt, während die Rotationssymmetrie der eingebrachten Mikrowellenenergie über die Zeit durch Rotation der jeweiligen Anordnung um die Reifenachse gewährleistet ist.

Schließlich können auch allgemein alle Wände des Mikrowellengefäßes, welches den behandelten Reifen umgibt, verstellbar, insbesondere neigbar und im Abstand zueinander veränderbar sein, um eine gezielte Verteilung bzw. Vergleichmäßigung der eingebrachten Mikrowellenenergie zu erreichen.

Eine weitere Möglichkeit, eine radiales Mikrowellenfeld in den Reifen einzubringen, besteht grundsätzlich darin, die Mikrowellenenergie von außen in radialer Richtung in Richtung auf das Reifenzentrum einzubringen. Hierbei muß selbstverständlich die Reifenform mikrowellendurchlässig sein. Auf der gegenüberliegenden Seite der Reifenform ist dann bevorzugt eine mikrowellenreflektierende Vorrichtung vorhanden, um eine Konzentration der Mikrowellenenergie im Reifen sicherzustellen. Die mikrowelleneinleitende Anordnung oder der Reifen sind wiederum um die Achse des Reifens rotierbar, um eine Rotationssymmetrie der eingebrachten Mikrowellenenergie über die Zeit sicherzustellen. Eine gezielte Verteilung der Mikrowellenenergie über den Reifen kann über die oben beschriebenen Maßnahmen entsprechend bewirkt werden, insbesondere durch ein Hin- und Herbewegen, gegebenenfalls mit unterschiedlichen Verweilzeiten, in axialer Richtung oder durch Neigung der Mündung des Mikrowellenleiters relativ zur Radialrichtung.

Selbstverständlich sind alle Maßnahmen auch mit den vorher beschriebenen Maßnahmen der Temperaturregelung über Aufbau der Mikrowellenform kombinierbar.

Die Mikrowellenform bzw. der behandelte Reifen kann sich erfindungsgemäß innerhalb oder außerhalb der oben beschriebenen Plattenanordnung befinden. Die Plattenanordnung kann dabei auch so ausgestaltet sein, daß sich die Öffnung in radialer Richtung nach außen erweitert in Art eines Hornstrahlers. Hierdurch wird für eine weitere Vergleichmäßigung des radialen Feldes gesorgt. In diesem Falle befindet sich der Reifen bevorzugt im bzw. außerhalb des Hornbereiches.

Schließlich kann die gesamte Anordnung als geschlossenes System ausgebildet sein, welches mit Druck beaufschlagbar ist. Hierdurch kann der Reifen unter Druck gesetzt bzw. unter Druck gehalten werden. Im zweiten Falle kann der Reifen zuvor in einer Presse unter Druck gesetzt worden sein. Anschließend wird er unter Aufrechterhaltung des Druckes beispielsweise über eine Form in die Mikrowellenanordnung gebracht, welche ihrerseits unter Druck steht.

Die beschriebenen Mikrowellenanordnungen können auch in eine konventionelle Heizpresse eingebaut werden. Dies ist kostengünstig und platzsparend. Außerdem wird der Herstellungsprozeß beschleunigt, da kein zusätzliches Einlegen in die Mikrowellenform erforderlich ist.

In der Zeichnung sind verschiedene Mikrowellenanordnungen dargestellt. Es zeigen
- Figur 1: eine perspektivische Darstellung einer ersten Variante einer Mikrowellenanordnung,
- Figur 2: eine zweite Variante einer Mikrowellenanordnung,
- Figur 3: eine dritte Variante einer Mikrowellenanordnung,
- Figur 4: eine vierte Variante einer Mikrowellenanordnung,
- Figur 5: eine perspektivische Darstellung des mündungsseitigen Endes eines Mikrowellenhohlleiters,
- Figur 6: einen Querschnitt durch eine Variante des Mikrowellenhohlleiters,
- Figur 7: eine Draufsicht auf ein Endstück eines Mikrowellenhohlleiters,
- Figur 8: eine Draufsicht auf eine Variante des Endstücks eines Mikrowellenhohlleiters,
- Figur 9: eine weitere Variante einer Mikrowellenanordnung und
- Figur 10: noch eine Variante einer Mikrowellenanordnung.

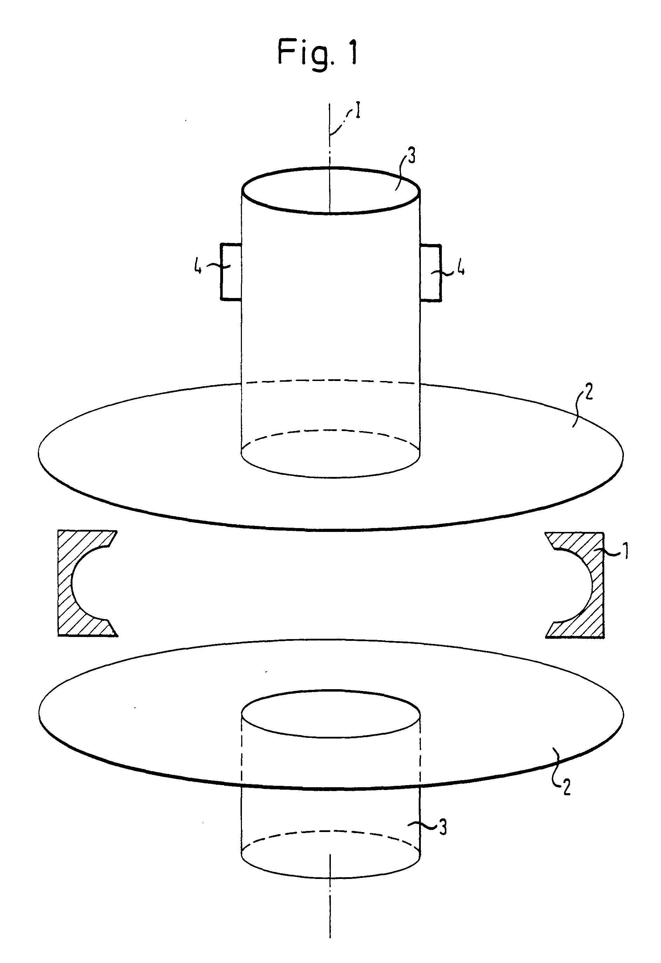

Bei der in Figur 1 dargestellten Mikrowellenanordnung befindet sich der Reifen (nicht dargestellt) samt Reifenheizform 1 zwischen zwei parallelen kreisförmigen mikrowellenreflektierenden Platten 2, deren Ebenen sich senkrecht zur Axialrichtung des Reifens erstrecken. Die Platten 2 besitzen jeweils eine zentrale Durchtrittsöffnung, an welche sich jeweils nach außen ein Mikrowellenhohlleiter 3 anschließt. Die Mikrowellenhohlleiter 3 weisen zusätzliche Mikrowelleneinkuppelstellen 4 auf.

Über die Hohlleiter 3 werden Mikrowellen axial in das Zentrum der Reifenform 1 eingeleitet und zwischen den parallelen Platten 2 hin und her reflektiert. Ein Austritt der Mikrowellen ist nur in radialer Richtung möglich, wobei die Mikrowellen den in der Reifenform 1 vorhandenen Reifen radial durchdringen und auf diesen Energie zur Aufheizung übertragen.

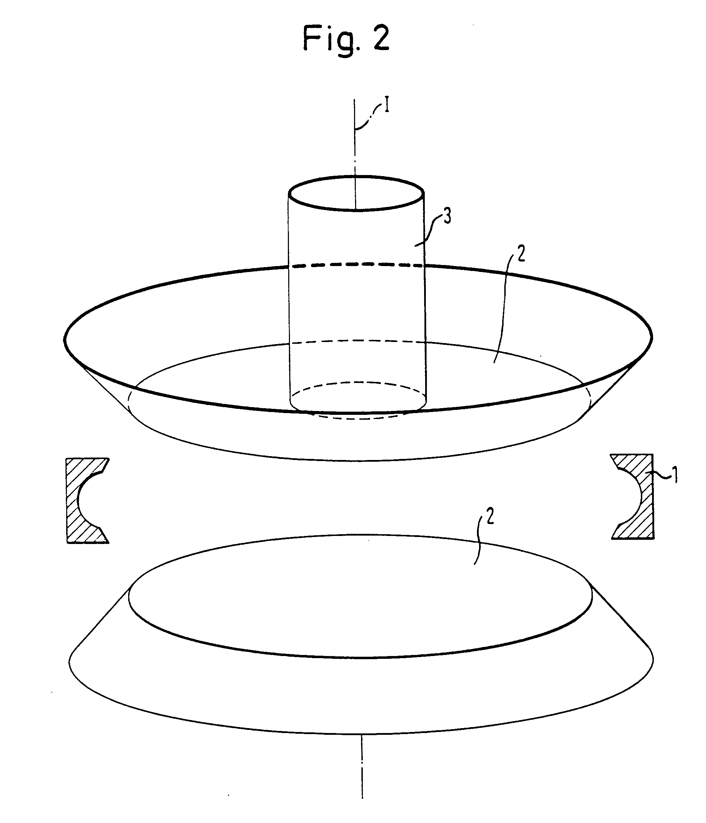

Bei der Variante gemäß Figur 2 sind die beiden parallen mikrowellenreflektierenden Platten 2, welche axial beidseits der Reifenheizform 1 vorhanden sind, an ihrem radial äußeren Ende in axialer Richtung hornartig erweitert. Die Reifenheizform 1 befindet sich bei dieser Variante im Hornbereich, Sie kann aber auch außerhalb des Hornbereichs vorgesehen sein, ebenso wie sie sich bei der Variante von Figur 1 radial außerhalb der beiden Platten befinden kann.

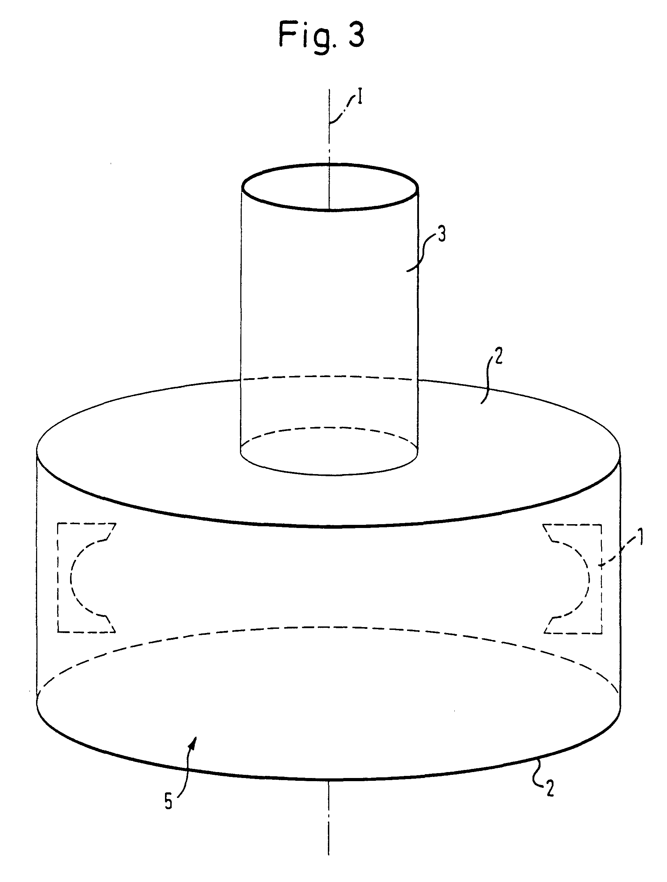

Bei der Variante von Figur 3 ist die Mikrowellenanlage durch ein Gehäuse 5 umschlossen, welches einerseits einen Mikrowellenaustritt verhindert und andererseits als Druckraum ausgebildet sein kann. Die beiden parallelen Platten 2 bilden dabei jeweils eine Begrenzungsfläche des Gehäuses 5.

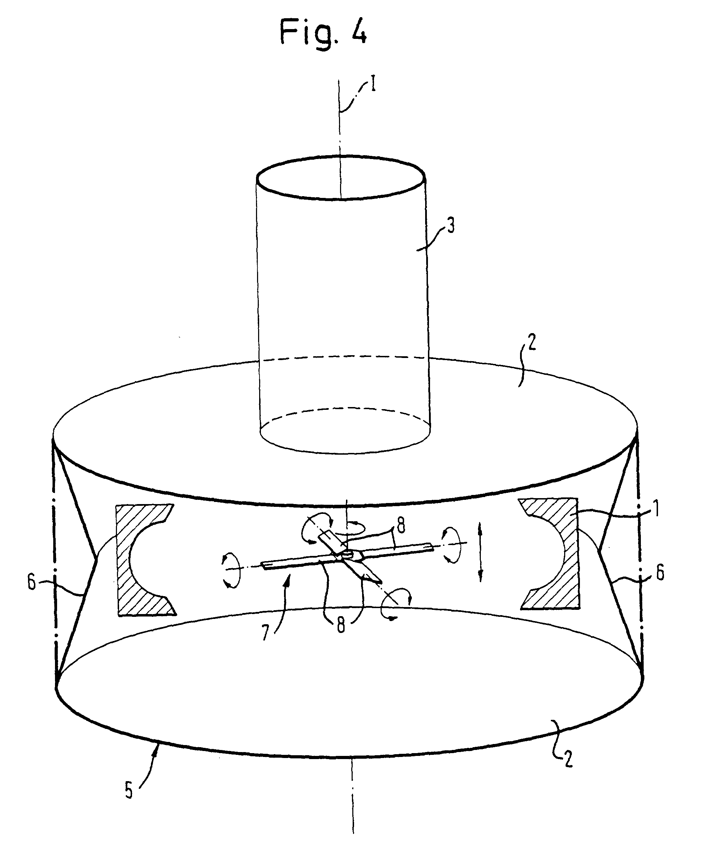

In Figur 4 ist eine weitere Variante dargestellt, bei welcher die radialen Begrenzungsflächen des Mikrowellengehäuses 5 neigbar und im Abstand zueinander veränderbar sind. Dies ist durch die seitlichen Keile 6 angedeutet. Desweiteren ist in dieser Variante vor der Austrittsöffnung des Mikrowellenhohlleiters 3 im Zentrum der Reifenheizform 1 ein um die Reifenachse rotierbarer Mikrowellenquirl 7 vorhanden, der zum einen bevorzugt in axialer Richtung hin und her bewegbar ist und zum anderen in ihrer Neigung verstellbare Flügel 8 aufweist. Die Flügel bestehen aus mikrowellenreflektierendem Material und sorgen für eine Verteilung der über den Hohlleiter 3 eingebrachten Mikrowellenstrahlung. 5 Der Mikrowellenquirl dreht sich um die Reifenachse um eine Rotationssymmetrie der eingebrachten Mikrowellenenergie über die Zeit zu gewährleisten.

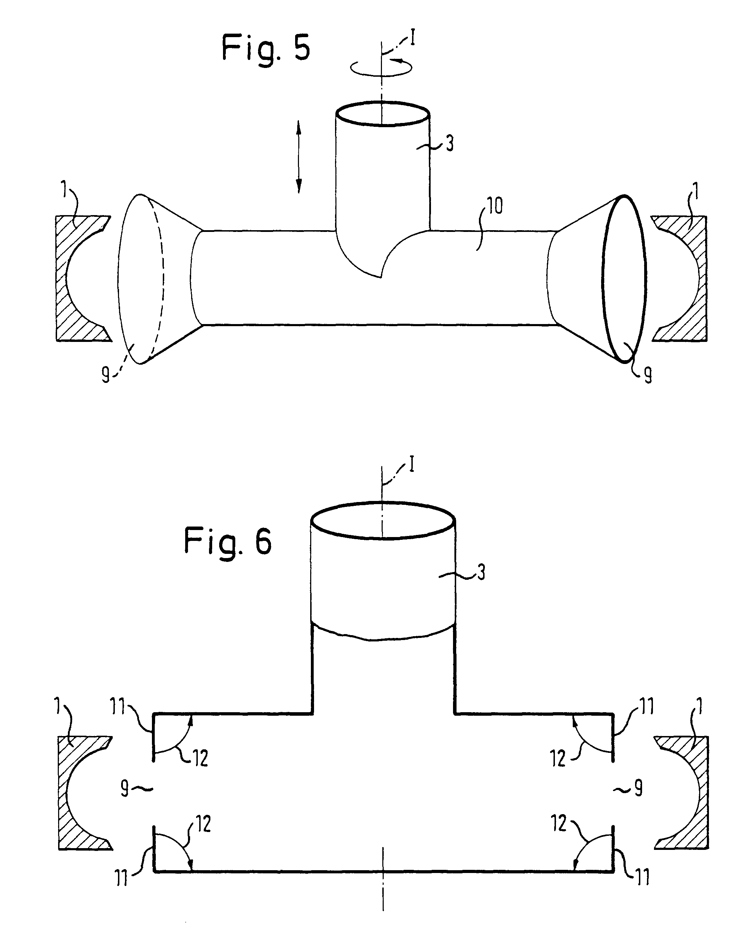

Figur 5 zeigt das mündungsseitige Ende 10 einer Variante des Hohlleiters 3, welches sich im Zentrum der Reifenheizform 1 befindet. In dem dargestellten Beispiel ist das mündungsseitige Ende 10 des Mikrowellenhohlleiters 3 T-formig ausgebildet mit zwei in radialer Richtung weisenden Austrittsöffnungen 9, welche zur Vermeidung von Beugungen der Mikrowelle hornartig erweitert sind. Die Mündungen 9 sind um die Reifenachse rotierbar und in Axialrichtung hin- und herbewegbar oder zur Radialrichtung neigbar ausgebildet.

Bei der in Figur 6 dargestellten Variante des Hohlleiters 3 sind im Bereich der radialen Austrittsöffnungen 9 mikrowellenabsorbierende bzw. -reflektierende Klappen 11 vorgesehen, mit welchen bestimmte Reifenbereiche abgeschirmt werden können. Durch Ausklappen der Klappen 11 wird die Beaufschlagung dieser Bereiche mit Mikrowellenenergie verhindert, so daß auf diese Weise der Energieeintrag in bestimmte Reifenbereiche regelbar ist. Die Klappen 11 können während einer bestimmten Zeit ausgeklappt werden, um den gewünschten Energieeintrag in den betroffenen Bereichen zu erzielen. Die Pfeile 12 in Figur 6 geben die Richtung an, in welcher die Klappen 11 wegklappbar sind. Hier, ebenso wie in Figur 5, ist der Querschnitt der Austrittsöffnung 9 des Hohlleiters 3 größer als die Breite des behandelten Reifens bzw. der Reifenheizform 1.

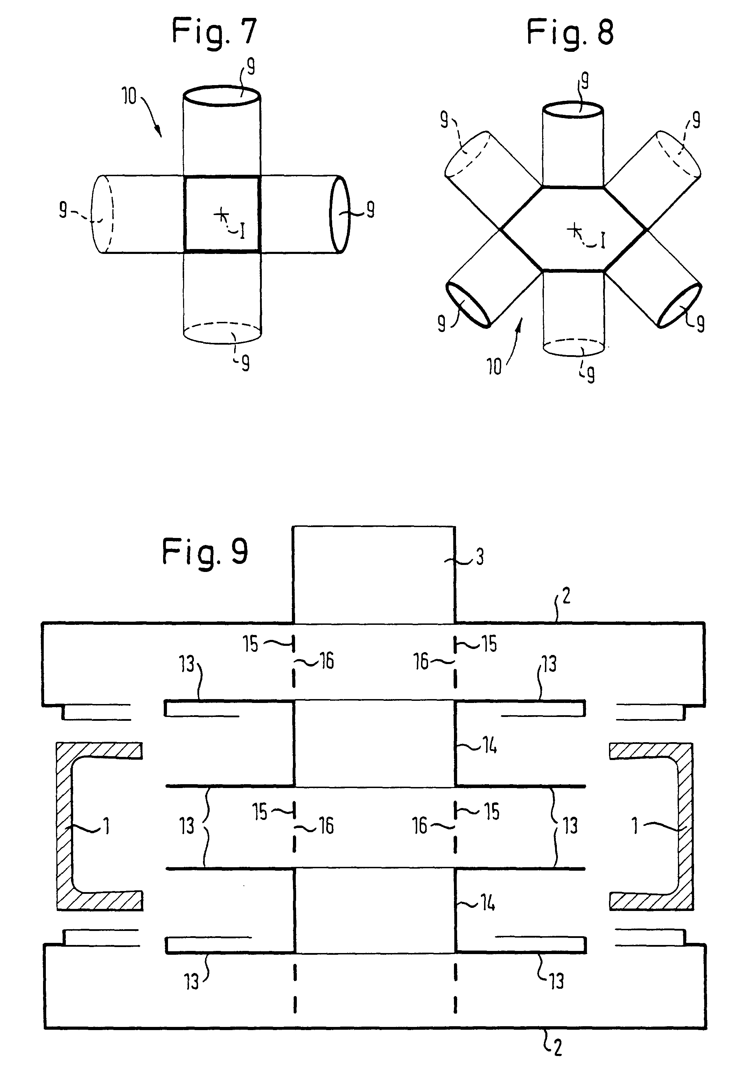

In Figuren 7 und 8 sind zwei Varianten der Endstücke 10 des Hohlleiters 3 in Draufsicht dargestellt, die alternativ zu dem T-förmigen Endstück des Hohlleiters 3 von Figur 5 verwendet werden können. Figur 7 zeigt zwei gekreuzte, in einer Ebene liegende Hohlleiterabschnitte mit vier jeweils in entgegengesetzter Richtung weisenden Austrittsöffnungen 9 für die Mikrowellenstrahlung. Figur 8 zeigt eine Ausführungsform, bei welcher die radialen Austrittsöffnungen 9 verschiedene Neigungswinkel zwische 0° und 90° zur Radialrichtung aufweisen. Hierdurch können verschiedene Reifenbereiche gezielt mit Mikrowellenenergie beaufschlagt werden. Die in den Figuren 7 und 8 dargestellten Endstücke 10 des Hohlleiters 3 sind ebenso mit diesem um die Achse I rotierbar wie die in den Figuren 5 und 6 dargestellten Varianten, um auch hier eine Rotationssymmetrie zu erreichen.

Figur 9 zeigt eine weitere Mikrowellenanordnung mit parallelen Platten 2, zwischen denen die Reifenheizform 1 angeordnet ist und die zentrale Ausnehmungen zur axialen Zuleitung der Mikrowellenenergie über Hohlleiter 3 aufweisen. Zwischen den Platten 2 sind weitere zu diesen parallele Platten 13 aus mikrowellenreflektierendem Material vorhanden, die ebenfalls eine zentrale Ausnehmung aufweisen. Jeweils zwei dieser Platten 13 sind miteinander über mit den Durchtrittsöffnungen fluchtende Hohlzylinder 14 ebenfalls aus mikrowellenreflektierendem Material verbunden. Auf diese Weise entsteht ein speziell strukturierter Hohlraum, in welchem sich die Mikrowellen ausbreiten können, um gezielt in bestimmte Reifenbereiche geleitet zu werden. In diesem Hohlraum sind zusätzlich Abschirmungen 15 für die Mikrowellenstrahlung vorhanden, welche zudem verschließbare Durchtrittsöffnungen 16 für die Mikrowellenstrahlung aufweisen. Durch die Abschirmungen 15 sowie durch Öffnen und Schließen der Durchtrittsöffnungen 16 kann die Verteilung der Mikrowellenenergie innerhalb des genannten Hohlraums und damit der Energieeintrag in bestimmten Reifenbereichen geregelt werden.

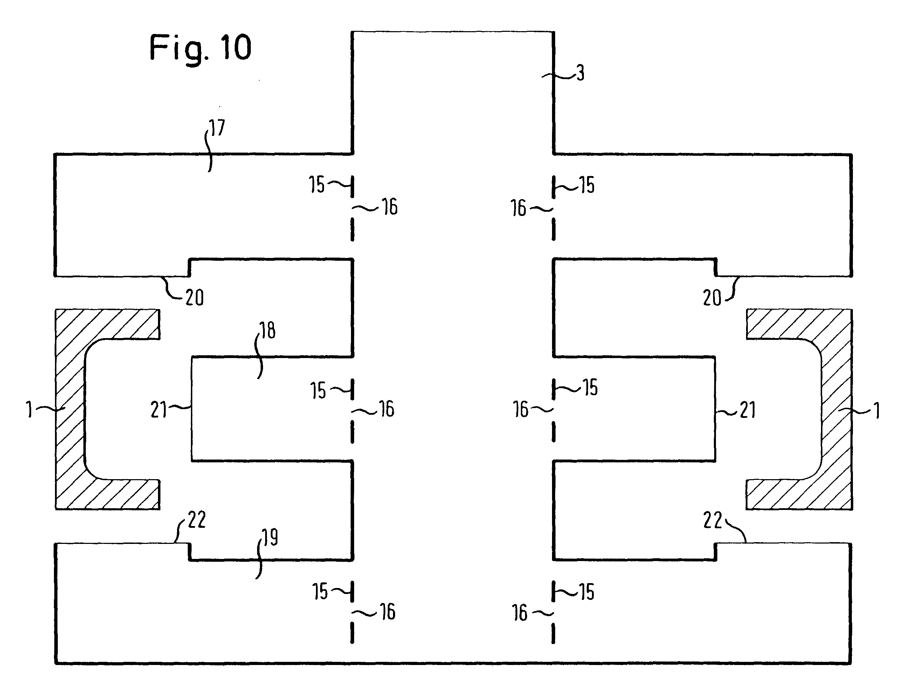

Figur 10 zeigt eine Variante der Mikrowellenanordnung von Figur 9, bei welcher anstelle der Platten 13 der Hohlleiter 3 in axialer Richtung mit aufeinanderfolgenden Endstücken 17, 18, 19 versehen ist, von denen das mittlere sich in der Ebene der Reifenheizform 1 befindet und mit radial mündenden Austrittsöffnungen 21 versehen ist. Die beiden axial äußeren Endstücke 17 und 19 weisen dagegen axial mündende, jeweils in Richtung auf die Reifenheizform gerichtete Austrittsöffnungen 20 bzw. 22 auf. Hierzu sind die Endstücke 17 und 19 gegenüber dem Hohlleiter 3 zweimal abgewinkelt und das Endstück 18 einmal.

In den Endstücken 17, 18 und 19 sind wiederum Abschirmungen 15 mit verschließbaren Durchtrittsöffnungen 16 vorhanden, mit welchen der Durchfluß der Mikrowellenstrahlung in dem jeweiligen Endstück 17, 18 bzw. 19 geregelt werden kann. Auch auf diese Weise wird ein gezielter Energieeintrag in bestimmten Reifenbereichen ermöglicht. Auch bei dieser Ausgestaltung sind die Endstücke 17, 18 und 19 zusammen mit dem Hohlleiter 3 um die Achse 1 rotierbar, um eine rotationssymmetrische Verteilung der Mikrowellenenergie zumindest über die Zeit zu erzielen.

### Bezugszeichenliste

- 1: Reifenheizform
- 2: Platte
- 3: Hohlleiter
- 4: Mikrowellen-Einkuppelstelle
- 5: Gehäuse
- 6: Keil
- 7: Mikrowellenquirl
- 8: Flügel
- 9: Austrittsöffnung
- 10: Endstück
- 11: Klappe
- 12: Pfeil
- 13: Platte
- 14: Hohlzylinder
- 15: Abschirmung
- 16: Durchtrittsöffnung
- 17: Endstück
- 18: Endstück
- 19: Endstück
- 20: Austrittsöffnung
- 21: Austrittsöffnung
- 22: Austrittsöffnung
- l: Reifenachse

## Patentansprüche

1. Verfahren zur Herstellung von Fahrzeugluftreifen mit sich zwischen zwei Wulstringen erstreckender Karkasse und einem zwischen Karkasse und Lauffläche angeordneten Gürtel, wobei der jeweilige Reifenrohling unter ausschließlicher Verwendung von nichtmetallischen Bestandteilen aufgebaut und wobei im Verlauf der unter Einwirkung von Wärme und Druck erfolgenden Vulkanisation und Formgebung zumindest ein Teil der erforderlichen Wärmeenergie in Form von Mikrowellenenergie in den Reifen eingebracht und die im Reifen herrschende Temperatur in Abhängigkeit von der Temperaturentwicklung in verschiedenen Reifenbereichen und unterschiedlich für verschiedene Reifenbereiche geregelt wird.

2. Verfahren nach Anspruch 1,
**dadurch gekennzeichnet,**
daß die Temperaturregelung durch gezielte Veränderung der in bestimmte Reifenbereiche eingebrachten Mikrowellenenergie und / oder durch Kühlung bestimmter Reifenbereiche bzw. Wärmeaustausch zwischen bestimmten Reifenbereichen erfolgt.

3. Verfahren nach Anspruch 1 oder 2,
**dadurch gekennzeichnet,**
daß die Regelung eines unterschiedlichen Energieeintrags in verschiedene Reifenbereiche durch
eine entsprechende Geometrie des Mikrowellenfeldes, insbesondere durch geeignete Reflexion und Brechung erfolgt, und / oder durch zumindest zeitweises Abdecken bestimmter Reifenbereiche, beispielsweise durch mikrowellenreflektierende Klappen.

4. Verfahren nach einem der vorhergehenden Ansprüche,
**dadurch gekennzeichnet,**
daß der Reifenrohling zunächst konventionell oder durch Mikrowellenenergie vorgewärmt, anschließend in einer Heizpresse mit Druck beaufschlagt und erwärmt und schließlich unter Druck aus der Heizpresse entnommen und in einer Mikrowellenanlage ausvulkanisiert wird.

5. Verfahren nach einem der vorhergehenden Ansprüche,
**dadurch gekennzeichnet,**
daß das Mikrowellenfeld rotationssymmetrisch ausgebildet ist und den Reifen insbesondere radial durchstrahlt, wobei die Mikrowellenstrahlen axial in das Zentrum des Reifens eingeleitet und dort in radiale Richtung umgelenkt werden.

6. Verfahren nach Anspruch 5,
**dadurch gekennzeichnet,**
daß durch eine Relativbewegung zwischen Mikrowellenfeld und Reifen die eingebrachte Mikrowellenenergie in Reifenumfangsrichtung über die Zeit vergleichmäßigt und / oder in axialer Richtung gezielt verteilt wird, wobei der Reifen im Mikrowellenfeld oder das Mikrowellenfeld um die Reifenachse rotiert.

7. Vorrichtung zur Durchführung des Verfahrens nach Anspruch 1,
**gekennzeichnet durch**
zwei parallele mikrowellenreflektierende Platten (2), zwischen welche der Reifen bzw. die Reifenheizform (1) eingebracht werden kann, wobei sich die beiden Platten (2) senkrecht zur Reifenachse (1) erstrecken und mindestens eine der Platten eine zentrale Ausnehmung zum Einleiten der Mikrowellenstrahlung in das Zentrum des Reifens aufweist, sowie Mittel zur Regelung der im Reifen herrschenden Temperatur in Abhängigkeit von der Temperatur entwicklung in verschiedenen Reifenbereichen und unterschiedlich für verschiedene Reifenbereiche.

8. Vorrichtung nach Anspruch 7,
**dadurch gekennzeichnet,**
daß die beiden mikrowellenreflektierenden Platten (2) relativ zueinander beweglich sind, insbesondere symmetrisch zur Reifenmittelebene.

9. Vorrichtung nach Anspruch 7 oder 8,
**dadurch gekennzeichnet,**
daß die Platten (2) radial außen in axialer Richtung hornartig erweitert sind, wobei der Reifen im Hornbereich oder radial außerhalb desselben angeordnet ist.

10. Vorrichtung zur Durchführung des Verfahrens nach Anspruch 1,
**gekennzeichnet durch**
einen Mikrowellenhohlleiter (3) zur Einleitung der Mikrowellenstrahlung in das Zentrum des Reifens bzw. der Reifenheizform (1), welcher mindestens eine in radialer Richtung weisende Austrittsöffnung (9) für die Mikrowellenenergie aufweist, wobei insbesondere der Hohlleiter (3) im Zentrum der Reifenheizform (1) abgewinkelt ist bzw. ein T-förmiges oder ein ein- oder mehrfach gekreuztes Endstück (10) mit entsprechend orientierten Austrittsöffnungen (9) für die Mikrowellenstrahlung aufweist, sowie Mittel zur Regelung der im Reifen herrschenden Temperatur in Abhängigkeit von der Temperatur entwicklung in verschiedenen Reifenbereichen und unterschiedlich für verschiedene Reifenbereiche.

11. Vorrichtung nach Anspruch 10,
**dadurch gekennzeichnet,**
daß die radiale Austrittsöffnung (9) um die Reifenachse (1) rotierbar oder zur Radialrichtung neigbar bzw. geneigt und / oder auf einer Spiralbahn um die Reifenachse (1) bewegbar ist und / oder axial hin-und herbewegbar ist.

12. Vorrichtung nach Anspruch 7,
**dadurch gekennzeichnet,**
daß zwischen den beiden Platten (2) vor der zentralen Ausnehmung zum Einleiten der Mikrowellenstrahlen mindestens ein um die Reifenachse rotierbarer Mikrowellenquirl (7) angeordnet ist, der um die Längsachse verdrehbare Flügel (8) aufweist und insbesondere axial hin- und herbewegbar ist.

13. Vorrichtung nach einem der vorhergehenden Ansprüche,
**dadurch gekennzeichnet,**
daß der Reifen von neigbaren und / oder relativ zueinander beweglichen mikrowellenreflektierenden Wänden umgeben ist und daß in der Mikrowellenanordnung Abschirmungen (11, 15) vorhanden sind, welche wegklappbar sind und / oder verschließbare Druchtrittsöffnungen (16) aufweisen.

## Claims

1. Method of manufacturing pneumatic vehicle tyres which have a carcass which extends between two bead rings and a breaker arranged between the carcass and a tread, wherein the respective tyre blank is built up using exclusively non-metallic components, and wherein, in the course of vulcanisation and shaping which takes place under the action of heat and pressure, at least a part of the thermal energy that is required is introduced into the tyre in the form of microwave energy and the temperature which prevails in the tyre is regulated in different tyre regions in dependence on the temperature development and differently for different tyre regions.

2. Method in accordance with claim 1, characterised in that the temperature regulation takes place by intentional changing of the microwave energy introduced into specific tyre regions and/or by cooling specific tyre regions, or by thermal exchange between specific tyre regions.

3. Method in accordance with claim 1 or claim 2, characterised in that the regulation of a different energy input into various tyre regions takes place by a corresponding geometry of the microwave field, in particular by suitable reflection and refraction and/or by at least partial covering over of specific tyre regions, for example by microwave reflecting flaps.

4. Method in accordance with any one of the preceding claims, characterised in that the tyre blank is initially pre-heated conventionally or by microwave energy, is subsequently subjected to pressure in a heating press and heated up and is finally removed under pressure from the heating press and vulcanised in a microwave plant.

5. Method in accordance with any one of the preceding claims, characterised in that the microwave field is of rotationally symmetrical design and, in particular, radiates radially through the tyre, with the microwave rays being axially introduced into the centre of the tyre and deflected there into the radial direction.

6. Method in accordance with claim 5, characterised in that through a relative movement between the microwave field and the tyre, the microwave energy which is introduced is smoothed out over time in the circumferential direction of the tyre and/or is intentionally distributed in the axial direction, with the tyre rotating in the microwave field or with the microwave field rotating about the tyre axis.

7. Apparatus for carrying out the method of claim 1, characterised by two parallel microwave reflecting plates (2) between which the tyre or the tyre heating mould (1) can be introduced, with the two plates (2) extending perpendicular to the axis (I) of the tyre, and at least one of the plates having a central cut-out for the introduction of the microwave radiation into the centre of the tyre, and means for regulating the temperature which prevails in the tyre in dependence on the temperature development in different tyre regions and differently for different tyre regions.

8. Apparatus in accordance with claim 7, characterised in that the two microwave reflecting plates (2) are movable relative to one another, in particular symmetrically to the central plane of the tyre.

9. Apparatus in accordance with claim 9, characterised in that the plates (2) are enlarged radially outwardly in the axial direction in horn-like manner, with the tyre being arranged in the horn region or radially outside of the latter.

10. Apparatus for carrying out the method of claim 1, characterised by a hollow microwave guide 3 for introducing the microwave radiation into the centre of the tyre or into the tyre heating mould (1) which has at least one outlet opening (9) pointing in the radial direction for the microwave energy, with the wave guide (3) being in particular angled in the centre of the tyre heating mould (1), or having a T-shaped or singly or multiply crossed end piece (10) with correspondingly orientated outlet openings (9) for the microwave radiation, and means for regulating the temperature which prevails in the tyre in dependence on the temperature development in different tyre regions and differently for different tyre regions.

11. Apparatus in accordance with claim 10, characterised in that the radial outlet opening (9) is rotatable about the tyre axis (I) or can be inclined or is inclined to the radial direction and/or is movable on a spiral track around the axis (I) of the tyre and/or is axially movable to and fro.

12. Apparatus in accordance with claim 7, characterised in that at least one microwave stirrer (7) rotatable about the tyre axis is arranged between the two plates (2) in front of the central cut-out for the introduction of the microwave rays and has vanes (8) which are rotatable about the longitudinal axis and is in particular movable axially to and fro.

13. Apparatus in accordance with any one of the preceding claims, characterised in that the tyre is surrounded by microwave reflecting walls which are inclinable and/or movable relative to one another; and in that screens (11, 15) are present in the microwave arrangement which are pivotable out of the way and/or have closable entry openings (16).

## Revendications

1. Procédé pour la fabrication de pneumatiques de véhicule, comprenant une carcasse qui s'étend entre deux bourrelets annulaires et une ceinture qui s'étend entre la carcasse et la bande de roulement, dans lequel l'ébauche de pneumatique respective est préparée en utilisant exclusivement des composants non métalliques, et dans lequel au cours de la vulcanisation et de la mise en forme qui se produisent sous l'action de chaleur et de pression, au moins une partie de l'énergie thermique nécessaire est apportée dans le pneumatique sous la forme d'énergie à micro-ondes, et la température qui règne dans le pneumatique est régulée en fonction du développement de température dans différentes zones du pneumatique et de façon différente pour différentes zones du pneumatique.

2. Procédé selon la revendication 1, caractérisé en ce que la régulation de température a lieu par modification ciblée de l'énergie à micro-ondes apportée dans certaines zones du pneumatique et/ou pas refroidissement de zones déterminées du pneumatique, ou encore par échange de chaleur entre certaines zones du pneumatique.

3. Procédé selon l'une ou l'autre des revendications 1 et 2, caractérisé en ce que la régulation de l'apport différent d'énergie dans des zones différentes du pneumatique a lieu grâce à une géométrie correspondante du champ à micro-ondes, en particulier grâce à une réflexion et une réfraction appropriées, et/ou par recouvrement au moins temporaire de certaines zones du pneumatique, par exemple par des volets qui réfléchissent les micro-ondes.

4. Procédé selon l'une des revendications précédentes, caractérisé en ce que l'ébauche de pneumatique est tout d'abord réchauffée de façon traditionnelle, ou encore au moyen d'énergie à micro-ondes, en ce qu'elle est ensuite mise sous pression dans une presse de chauffage et réchauffée, et enfin enlevée sous pression hors de la presse de chauffage et vulcanisée dans une installation à micro-ondes.

5. Procédé selon l'une des revendications précédentes, caractérisé en ce que le champ de micro-ondes est constitué à symétrie de révolution, et en ce qu'il est émis en particulier radialement à travers le pneumatique, et ce que le rayonnement à micro-ondes est appliqué axialement dans le centre du pneumatique et renvoyé en direction radiale à cet endroit.

6. Procédé selon la revendication 5, caractérisé en ce que, par un déplacement relatif entre le champ de micro-ondes et le pneumatique, l'énergie apportée par micro-ondes est rendue régulière dans la direction périphérique du pneumatique au cours du temps, et/ou en ce qu'elle est répartie de façon ciblée en direction axiale, le pneumatique étant mis en rotation dans le champ de micro-ondes, ou le champ de micro-ondes étant mis en rotation autour de l'axe du pneumatique.

7. Appareil pour la mise en oeuvre du procédé selon la revendication 1, caractérisé par deux plaques parallèles (2) qui réfléchissent les micro-ondes, entre lesquelles on peut introduire le pneumatique, ou respectivement 1e moule de chauffage de pneumatique (1), lesdites plaques (2) s'étendant perpendiculairement à l'axe du pneumatique (1), et l'une des plaques au moins présentant un évidement central pour l'application du rayonnement à micro-ondes dans le centre du pneumatique, ainsi que des moyens pour réguler la température régnant dans le pneumatique en fonction du développement de température dans différentes zones du pneumatique, et de façon différente pour différentes zones du pneumatique.

8. Appareil selon la revendication 7, caractérisé en ce que les deux plaques (2) réfléchissant les micro-ondes sont mobiles l'une par rapport à l'autre, en particulier symétriquement par rapport au plan médian du pneumatique.

9. Appareil selon l'une ou l'autre des revendications 7 et 8, caractérisé en ce que les plaques (2) vont en s'évasant radialement à l'extérieur et en forme de cornet en direction axiale, et en ce que le pneumatique est agencé dans la région en cornet, ou bien radialement à l'extérieur de celle-ci.

10. Appareil pour la mise en oeuvre du procédé selon la revendication 1, caractérisé par un guide creux à micro-ondes (3) pour l'application du rayonnement de micro-ondes dans le centre du pneumatique, ou respectivement du moule de chauffage de pneumatique (1), celui-ci présentant au moins une ouverture de sortie orientée en direction radiale (9) pour l'énergie à micro-ondes, et en ce que ledit guide creux (3) est replié au centre du moule de chauffage de pneumatique (1), ou comporte une pièce terminale (10) en forme de T, ou une pièce terminale (10) croisée une ou plusieurs fois, avec des ouvertures de sortie (9) d'orientation correspondante pour le rayonnement à micro-ondes, ainsi que des moyens pour réguler la température régnant dans le pneumatique en fonction du développement de température dans différentes zones du pneumatique, et de manière différente pour différentes zones du pneumatique.

11. Appareil selon la revendication 10, caractérisé en ce que l'ouverture de sortie radiale (9) est susceptible de tourner autour de l'axe (1) du pneumatique, ou bien d'être inclinée par rapport à la direction radiale et/ou de se déplacer sur un trajet spiralé autour de l'axe du pneumatique (1), et/ou déplaçable en va-et-vient axialement.

12. Appareil selon la revendication 7, caractérisé en ce qu'il est prévu au moins un brasseur à micro-ondes (7) en rotation autour de l'axe du pneumatique, agencé devant l'évidement central, pour l'application du rayonnement à micro-ondes, celui-ci comportant une pale (8) en rotation autour de l'axe longitudinal, et en particulier déplaçable axialement en va-et-vient.

13. Appareil selon l'une des revendications précédentes, caractérisé en ce que le pneumatique est entouré par des parois réfléchissant les micro-ondes, susceptibles d'être inclinées et/ou d'être déplacées les unes par rapport aux autres, et en ce qu'il est prévu des écrans (11, 15) dans l'agencement à micro-ondes, ceux-ci pouvant être éloignés par rabattement et/ou comportant des ouvertures traversantes (16) obturables.
